Europäisches Patentamt

European Patent Office

Office européen des brevets

(11) Numéro de publication: **0 001 527**

**B1**

## (12) FASCICULE DE BREVET EUROPEEN

(21) Numéro de dépôt: **78400115.8**

(22) Date de dépôt: **27.09.78**

(51) Int. Cl.³: **F 16 L 23/04,**
**C 21 B 7/16**

(54) Dispositif d'assemblage, notamment entre deux tronçons d'une descente de vent de haut-fourneau

(30) Priorité: **30.09.77 FR 7729505**

(43) Date de publication de la demande:
**18.04.79 Bulletin 7908**

(45) Mention de la délivrance du brevet:
**06.08.80 Bulletin 8016**

(84) Etats contractants désignés:
**DE NL**

(56) Documents cités:
**FR - A - 1 304 341**
**US - A - 3 661 409**

(73) Titulaire: **Société dite: Union Siderurgique du Nord**
**et de l'Est de la France par abréviation "Usinor"**
**14, Rue d'Athènes**
**F - 75426 Paris, Cedex 09 (FR)**

(72) Inventeur: **Voituriez, Henry**
**444, Rue de Douvre**
**Malo Les Bains F - 59240 Dunkerque (FR)**
**Aymard, René**
**31, Rue Cortot Résidence Lafayette**
**F - 59760 Grande Synthe (FR)**

(74) Mandataire: **Lavoix, Jean**
**c/o Cabinet Lavoix 2, Place D'Estienne D'Orves**
**F - 75441 Paris Cedex 09 (FR)**

Courier Press, Leamington Spa, England.

Dispositif d'assemblage, notamment entre deux tronçons d'une descente de vent de haut-fourneau

La présente invention, due à la collaboration de Mm. Henry Voituriez, Ingénieur divisionnaire à l'Usine de Dunkerque de la Société demanderesse, et René Aymard, Chef d'atelier à la même usine, concerne les installations permettant d'alimenter en air chaud ou vent chaud les hauts-fourneaux.

De telles installations comprennent une circulaire de vent chaud reliée par des descentes de vent à des tuyères, l'expression descente de vent désignant ici l'ensemble des éléments de conduits placés entre la circulaire et la tuyère. Dans les installations connues, les éléments successifs sont reliés par des brides assemblées au moyen de goujons et d'écrous ou de clavettes. Du fait de ce type d'assemblage, il est long et difficile de remplacer l'un des éléments car le dégagement des clavettes ou le desserrage des écrous est rendu difficile et pénible du fait de la température élevée des pièces et de l'atmosphère environnante.

On connaît par ailleurs dans d'autres secteurs de la technique des dispositifs d'assemblage entre deux éléments supérieur et inférieur de conduit, comprenant deux brides portées respectivement par chacun des deux éléments à assembler, ces brides comportant des surfaces en regard d'étanchéité ainsi que des surfaces tronconiques destinées à coopérer avec des surfaces complémentaires ménagées sur des mâchoires, ces mâchoires étant reliées entre elles par des maillons de façon à consitiuer un collier pourvu de moyens de serrage et de desserrage. Le brevet américain N° 3 661 409 décrit notamment un tel dispositif dans lequel le collier est suspendu à un support fixé sur l'élément supérieur, au moyen de prolongements de certains des axes d'articulation des maillons constituant le collier. Dans cet agencement, l'ouverture du collier est limitée, peu rapide et il est nécessaire de prévoir sur le support des lumières de guidage de forme précise, ce qui en complique la fabrication.

Les dispositifs connus ne permettent donc pas un montage et un démontage aisés et rapides, ce qui est particulièrement gênant dans l'application considérée où les éléments à assembler sont lourds et encombrants.

Le but de cette invention est donc de fournir un dispositif d'assemblage entre deux éléments de conduits et notamment entre deux éléments d'une descente de vent chaud, qui ne présente pas les inconvénients des dispositifs connus et qui soit en particulier précis et robuste et permette un montage et un démontage aisés et rapides de l'élément inférieur.

Selon l'invention, le collier est suspendu à un support réalisé en deux parties, un première partie fixée sur l'élément supérieur et une deuxième partie articulée sur la première autour d'un axe parallèle aux axes d'articulation des maillons du collier, de façon à permettre l'ouverture et le dégagement du collier et autoriser le montage et le démontage de l'élément inférieur de la descente de vent.

Suivant d'autres caractéristiques:

— la partie fixe du support comprend une plaque de forme partiellement annulaire, s'étendant sur un angle au centre inférieur à 180°;

— la partie mobile du support comprend un bras de forme incurvée, qui s'étend sur un angle au centre d'environ 90° et supporte le collier au voisinage de son extrémité libre;

— les moyens de serrage et de desserrage comprennent deux ensembles à vis et écrou à peu près diamétralement opposés, dont l'un est associé à des moyens de déblocage rapide permettant après un desserrage déterminé de la vis de libérer l'ensemble vis et écrou de l'élément adjacent du collier de façon à pouvoir ouvrir ce dernier.

L'invention va être décrite plus en détail ci-dessous en se référant au dessin annexé donné uniquement à titre d'exemple et sur lequel:

— la Fig. 1 est une vue en coupe verticale d'une partie de descente de vent à laquelle l'invention est appliquée;

— la Fig. 2 est une vue en coupe horizontale suivant la ligne 2—2 de la Fig. 1;

— la Fig. 3 est une vue en coupe suivant la ligne 3—3 de la Fig. 2; et

— la Fig. 4 est une vue analogue à celle de la Fig. 2, mais à plus petite échelle, et montrant le dispositif en position d'ouverture.

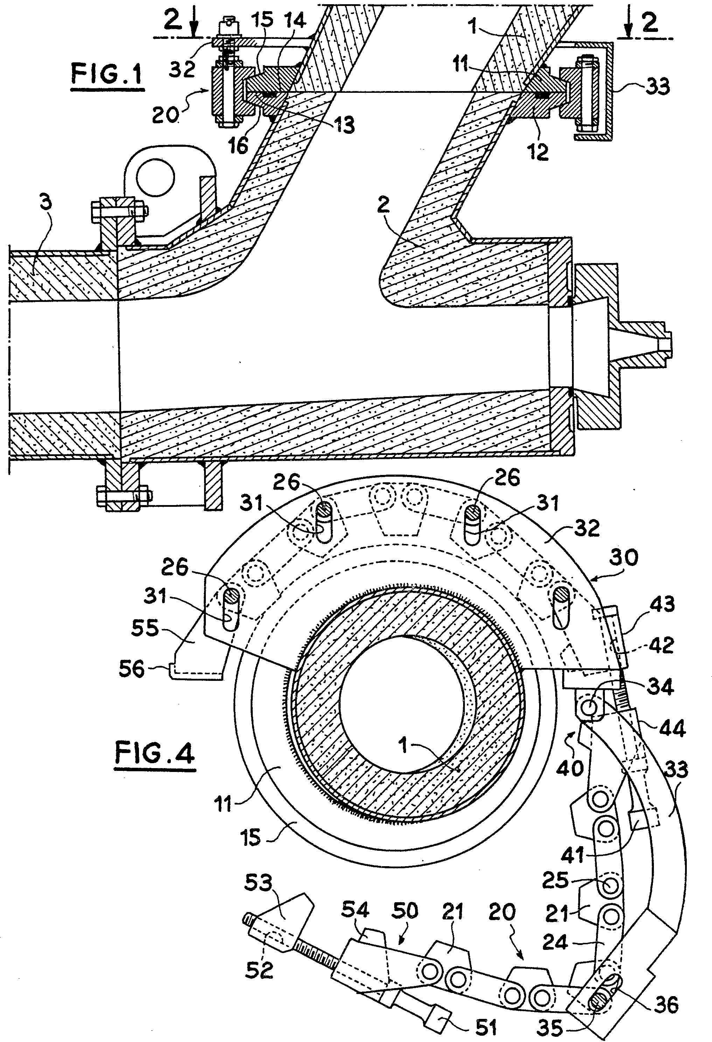

On voit sur la Fig. 1 une partie d'une descente de vent de haut-fourneau, comprenant un élément supérieur 1 qui est en fait le cône inférieur et un élément inférieur 2 en forme de T, ou dauphin, sur lequel est fixé un busillon 3. Le dispositif suivant l'invention est utilisé pour réaliser l'assemblage entre l'élément conique 1 et le dauphin 2.

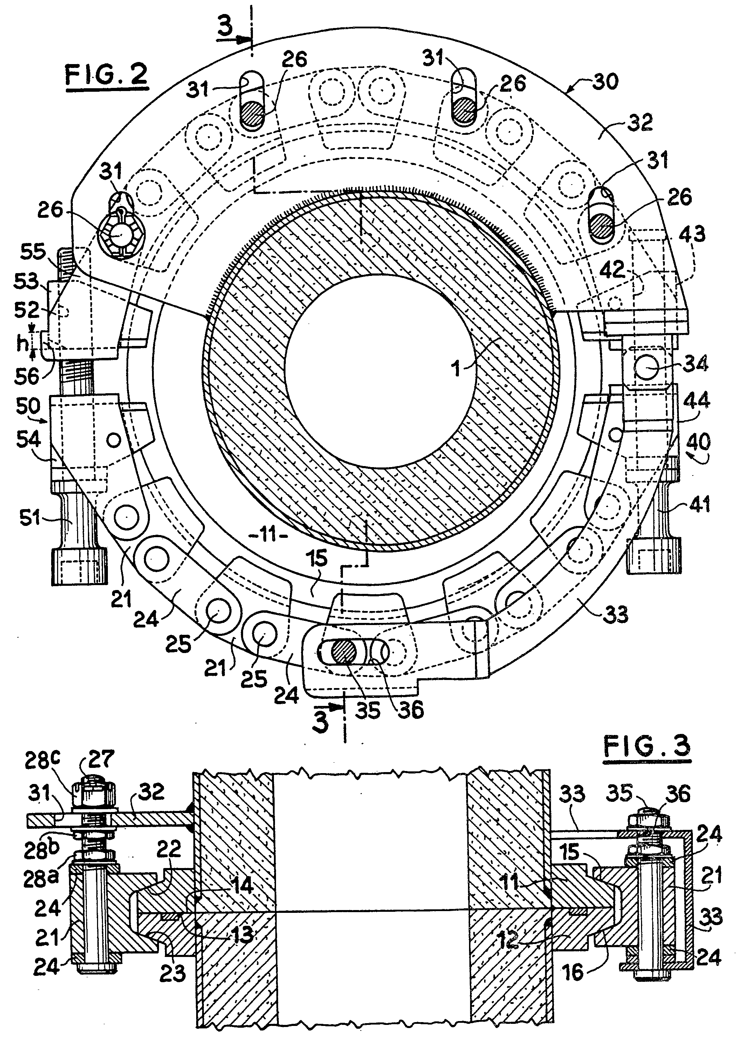

Ce dispositif comprend principalement deux brides 11, 12 fixées respectivement aux extrémités des éléments 1 et 2 et présentant des surfaces en regard d'étanchéité 13, 14 planes et horizontales, et des surfaces opposées ou extérieures tronconiques 15, 16. Ces deux brides forment donc un angle avec un plan perpendiculaire à l'axe des éléments 1 et 2. Elles coopèrent avec un collier de serrage 20 que l'on voit mieux sur les Fig. 2 et 3 et qui est constitué par plusieurs mâchoires 21 dont la surface interne délimite deux surfaces tronconiques 22, 23 ou délimitant un coin de façon à pouvoir coopérer avec les surfaces 15, 16 et réaliser le serrage des brides. Ces mâchoires sont reliées par des maillons 24 et articulées sur ces derniers par des axes 25. Les surfaces des brides et des mâchoires sont de préférence soumises à un traitement de sulfinusation ou analogue destiné à leur donner l'état de surface approprié.

Le collier 20 est suspendu à un support 30 par des tiges 26 qui constituent des prolongements de certains des axes d'articulation 25, comportant des parties supérieures filetées 27 reçues dans des lumières 31 de forme oblongue du support et associées à des écrous 28ᵃ, 28ᵇ, 28ᶜ. Le support 30 est constitué par une plaque 32 de forme partiellement annulaire, soudée sur lélément supérieur 1 et qui s'étend sur un angle au centre inférieur à 180°. Les lumières 31 recevant les tiges 26 ont une forme oblongue et sont à peu près parallèles entre elles et à peu près parallèles à la direction de dégagement de l'élément inférieur 2. Sur cette partie fixe du support est monté un bras 33 articulé autour d'un axe vertical, ce bras s'étendant sur un angle au centre d'environ 90° et supportant le collier 20 au voisinage de son extrémité libre au moyen d'une tige 35 reçue dans une lumière 36 également de forme oblongue mais s'étendant à peu près perpendiculairement aux lumières 31 lorsque le collier est en position fermée comme représenté sur la Fig. 2. Ce bras a dans l'ensemble une section en C, comme celà apparaît sur la Fig. 3.

Les moyens de serrage et de desserrage du collier comprennent deux ensembles 40, 50 à vis et écrou, diametralement opposés et dont les vis 41, 51 sont orientées, en position de serrage, à peu près parallèlement aux lumières 31. Le premier ensemble 40 est placé au voisinage de l'articulation 34 entre les deux parties du support et comprend la vis 41 et un écrou 42 délimité par une mâchoire 43. La vis 41 est montée rotative dans un élément de mâchoire 44. Les mâchoires 43, 44 ne sont bien entendu reliées à aucun maillon mais par la vis 41 et l'écrou 42.

L'autre ensemble 50 à vis et écrou comprend également la vis 51 et un écrou 52 délimité par une mâchoire 53. La vis 51 est montée rotative sur un élément de mâchoire 54, aucun maillon n'étant prévu entre les mâchoires 53, 54. Le collier 20 est donc en fait réalisé sous la forme de deux demi-colliers reliés par les deux ensembles de serrage 40, 50. De plus, dans ce sous-ensemble 50, l'élément de mâchoire 53 peut être dégagé du maillon 55 dans lequel il est reçu, ce maillon constituant une chape et comportant un rebord 56 contre lequel la surface latérale de la mâchoire 53 est normalement en appui. L'élément de mâchoire 53 formant écrou peut être dégagé latéralement du maillon 55 à partir du moment où la vis 51 a été desserrée sur une distance au moins égale à la hauteur *h* du rebord 56.

Le fonctionnement du dispositif que l'on vient de décrire est très simple et découle directement de la description effectuée ci-dessus; dans la position des Fig. 2 et 3, les deux éléments 1 et 2 de la descente de vent sont assemblés et le collier 20 est serré grâce aux deux ensembles à vis et écrou 40 et 50. Les mâchoires 21, 43, 44, 53, 54 réparties sur toute la périphérie des brides 11, 12 assurent par effet de coincement le serrage étanche de ces brides l'une contre l'autre.

Pour libérer et démonter l'élément inférieur, on desserre les deux ensembles à vis et écrou, la vis 51 étant desserrée suffisamment pour pouvoir libérer l'écrou 52, 53 de son logement. Ceci étant fait (Fig. 4), le bras 33 peut être dégagé par rotation autour de l'axe 34 et le collier 20 ouvert comme représenté sur cette même Fig. 4. Les brides ne sont plus alors serrées les unes contre les autres et l'élément inférieur peut être séparé de l'élément supérieur. Bien qu'étant horizontal, le collier peut être ouvert sur plus de 180° grâce à la réalisation du support en deux parties articulées lune sur l'autre.

Le remontage s'effectue tout aussi simplement et rapidement puisqu'il suffit d'amener les deux brides en contact lune contre l'autre, de mettre en place le collier 20 et l'écrou 52, 53, puis de serrer les deux vis 41, 51 pour obtenir un centrage automatique et une liaison solide entre les deux éléments.

Le résultat recherché est donc parfaitement obtenu et ce par des moyens relativement simples et robustes.

Bien entendu, le dispositif peut subir diverses modifications, un seul ensemble à vis et écrou à déblocage rapide analogue à l'ensemble 50 pouvant, le cas échéant, être prévu ou bien les moyens de support et de suspension du collier pouvant subir diverses modifications.

**Revendications**

1. Dispositif d'assemblage entre deux éléments de conduits et notamment deux troncons supérieur et inférieur d'une descente de vent alimentant un haut-fourneau, comprenant deux brides portées respectivement par chacun des deux éléments à assembler, ces brides comportant des surfaces en regard d'étanchéité ainsi que des surfaces tronconiques destinées à coopérer avec des surfaces complémentaires ménagées sur des mâchoires reliées par des maillons et constituant un collier pourvu de moyens de serrage et de desserrage, ce collier étant suspendu à un support fixé sur l'élément de conduit supérieur, caractérisé en ce que le support (30) est réalisé en deux parties (32, 33) une première partie (32) fixée sur ledit élément supérieur (1) et une deuxième partie (33) articulée sur la première autour d'un axe (34) parallèle aux axes d'articulation (25) des maillons du collier.

2. Dispositif suivant la revendication 1 dans lequel le collier est suspendu à son support au moyen de tiges qui constituent simultanément dex axes d'articulation des maillons de ce collier et qui sont reçues dans des lumières prévues dans le support, caractérisé en ce que les lumières (31) ménagées dans la partie fixe (32) du support sont parallèles entre elles, une lumière (36) ménagée dans la partie mobile (33) du support étant orientée à peu près perpendiculairement aux autres lumières (31), lorsque le dispositif est en position fermée.

3. Dispositif suivant l'une quelconque des revendications 1 et 2, caractérisé en ce que la partie fixe (32) du support comprend une plaque de forme partiellement annulaire, s'étendant sur un angle au centre inférieur à 180°.

4. Dispositif suivant l'une quelconque des revendications 1 à 3, caractérisé en ce que la partie mobile du support (30) comprend un bras (33) de forme incurvée, qui s'étend sur un angle au centre d'environ 90° et supporte le collier au voisinage de son extrémité libre.

5. Dispositif suivant l'une quelconque des revendications 1 à 4, caractérisé en ce que comme connu en soi, les moyens de serrage et de desserrage comprennent deux ensembles (40,50) à vis et écrou à peu près diamétralement opposés, l'un (40) de ces deux ensembles étant placé au voisinage de l'articulation (34) entre les deux parties du support.

6. Dispositif suivant la revendication 5, caractérisé en ce qu'en position de serrage, les vis (41,51) de ces deux ensembles sont orientées à peu près parallèlement aux lumières (31) ménagées dans la partie fixe (31) du support.

7. Dispositif suivant la revendication 5, caractérisé en ce que la vis (41,51) de chaque ensemble (40,50) est montée rotative dans un élément de mâchoire (44,54), l'écrou associé (42,52) étant ménagé également dans un élément de mâchoire (43,53).

8. Dispositif suivant la revendication 7, caractérisé en ce que l'élément de mâchoire (53) délimitant l'écrou (52) est reçu de façon amovible dans un maillon (55) en forme de chape, muni d'un rebord latéral (56) de retenue dudit élément (53).

9. Dispositif suivant l'une quelconque des revendications 1 à 8, caractérisé en ce que le plan de joint des brides est à peu près horizontal, alors que l'axe des éléments à raccorder est oblique.

## Patentansprüche

1. Vorrichtung zur Verbindung von zwei Röhrenelementen, insbesondere eines oberen und unteren Teils eines einen Hochofen versorgenden Windfalls, mit zwei auf den beiden zu verbindenden Elementen sitzenden Flanschen, wobei die Flansche einander zugekehrte Dichtflächen sowie kegelstumpfförmige Flächen für ein Zusammenwirken mit komplementären Flächen aufweisen, welche auf durch Kettenglieder verbundenen Klemmbacken ausgebildet sind, die einen mit einer Einrichtung zum Schließen und Lösen versehenen Klemmring bilden, wobei der Klemmring an einem Träger aufgehängt ist, welcher an dem oberen Röhrenelement befestigt ist, dadurch gekennzeichnet, daß der Träger (30) in zwei Teilen (32, 33) ausgebildet ist, von denen das erste Teil (32) an dem oberen Element (1) befestigt und das zweite Teil (33) am ersten Teil mit zu den Gelenkachsen (25) der Kettenglieder des Klemmrings paralleler Achse (34) angelenkt ist.

2. Vorrichtung nach Anspruch 1, wobei der Klemmring an seinem Träger mit Bolzen aufgehängt ist, die gleichzeitig Gelenkachsen der Kettenglieder des Spannrings bilden und in im Träger vorgesehenen Schlitzen aufgenommen sind, dadurch gekennzeichnet, daß die im feststehenden Teil (32) des Trägers vorgesehenen Schlitze (31) untereinander parallel sind, und daß ein im beweglichen Teil (33) des Träger vorgesehener Schlitz (36) im geschlossenen Zustand der Vorrichtung ungefähr senkrecht zu den anderen Schlitzen (31) ausgerichtet ist.

3. Vorrichtung nach einem der Ansprüche 1 und 2, dadurch gekennzeichnet, daß das feststehende Teil (32) des Trägers eine teilringförmige Platte aufweist, die sich über einen Mittelpunktswinkel von weniger als 180° erstreckt.

4. Vorrichtung nach einem der Ansprüche 1 bis 3, dadurch gekennzeichnet, daß das bewegliche Teil des Trägers (30) einen gekrümmten Arm (33) aufweist, der sich über einen Mittelpunktswinkel von ungefähr 90° erstreckt und den Klemmring im Bereich seines freien Endes trägt.

5. Vorrichtung nach einem der Ansprüche 1 bis 4, dadurch gekennzeichnet, daß in an sich bekannter Weise die Einrichtung zum Schließen und Lösen zwei diametral gegenüberliegende Schraube-Muttereinheiten (40, 50) umfaßt, von denen die eine (40) der beiden Einheiten im Bereich des Gelenks (34) zwischen den beiden Trägerteilen angeordnet ist.

6. Vorrichtung nach Anspruch 5, dadurch gekennzeichnet, daß in Schließstellung die Schrauben (41, 51) der beiden Einheiten (40, 50) ungefähr parallel zu den im feststehenden Teil (32) befindlichen Schlitzen (31) ausgerichtet sind.

7. Vorrichtung nach Anspruch 5, dadurch gekennzeichnet, daß die Schraube (41, 51) einer jeden Einheit in einem Klemmbackenelement (44, 54) drehbar angebracht ist, und daß zugehörige Mutter (42, 52) ebenfalls in einem Klemmbackenelement (43, 53) ausgebildet ist.

8. Vorrichtung nach Anspruch 7, dadurch gekennzeichnet, daß das die Mutter (52) bestimmende Klemmbackenelement (53) lösbar in einem Kettenglied (55) in Form eines Gabelkopfs aufgenommen ist, welcher mit einer seitlichen Krempe (56) zum Festhalten des Elements (53) versehen ist.

9. Vorrichtung nach einem der Ansprüche 1 bis 8, dadurch gekennzeichnet, daß die Stoßebene der Flansche ungefähr horizontal ist, während die Ache der beiden zu verbindenden Elemente schräg verläuft.

## Claims

1. A device for assembling two pipe elements and in particular upper and lower elements of a blast downpipe supplying blast to a blast furnace, comprising two flanges respectively carried by each of the two elements to be assembled, said flanges comprising facing sealing surfaces and frustoconical surfaces adapted to cooperate with complementary surfaces formed on jaws which are interconnected by links so as to constitute a collar provided with clamping and unclamping means, said collar being suspended from a support fixed to the upper pipe element, characterized in that the support (30) is constructed in two parts (32, 33); a first part (32) fixed to said upper element (1) and a second part (33) pivotally mounted on the first part to pivot about an axis (34) parallel to the axes (25) of articulation of the links of the collar.

2. A device as claimed in claim 1, wherein the collar is suspended from its support by rods which also constitute pivot pins of the links of the collar and which are received in apertures provided in the support, characterized in that the apertures (31) formed in the fixed part (32) of the support are parallel to each other, an aperture (36) formed in the moving part (33) of the support being oriented in a direction substantially perpendicular to the other apertures (31), when the device is in the closed position.

3. A device as claimed in claim 1 or 2, characterized in that the fixed part of the support (30) comprises a partly annular plate, which subtends an angle of the centre of less than 180°.

4. A device as claimed in claim 1, 2 or 3, characterized in that the moving part of the support (30) comprises an arm (33) of curved shape which subtends an angle at the centre of about 90° and supports the collar in the vicinity of the free end thereof.

5. A device as claimed in any one of the claims 1—4, characterized in that, as known *per se,* the clamping and unclamping means comprise two screw and nut units (40, 50) which are substantially diametrically opposed, one (40) of said units being placed in the vicinity of the pivotal connection (34) between the two parts of the support.

6. A device as claimed in claim 5, characterized in that, in the clamping position, the screws (41, 51) of the two units are oriented substantially in a direction parallel to the apertures (31) formed in the fixed part (32) of the support.

7. A device as claimed in claim 5, characterized in that the screw (41, 51) of each unit (40, 50) is rotatably mounted in a jaw element (44, 54).

8. A device as claimed in claim 7, characterized in that the jaw element (53) defining the nut (52) is received in a detachable manner in a link (55) in the form of a fork member, provided with a lateral flange (56) for retaining said jaw element.

9. A device as claimed in any one of the claims 1 to 8, characterized in that the joint plane of the flanges is substantially horizontal whereas the axis of the elements to be interconnected is oblique.

FIG.1

FIG.4

0 001 527

FIG. 2

FIG. 3

2